# EUROPÄISCHE PATENTANMELDUNG

(11) **EP 4 534 467 A1**
(43) Veröffentlichungstag der Anmeldung: **09.04.2025**
(21) Anmeldenummer: 23202078.4
(22) Anmeldetag: 06.10.2023
(51) Int. Cl.: B66C 13/40, B66F 9/075, G05B 19/042

(54) **VERFAHREN ZUM KONFIGURIEREN ZUMINDEST EINER ARBEITSFUNKTION**

(71) Anmelder: Palfinger AG, 5101 Bergheim bei Salzburg (AT)
(72) Erfinder: BERGMAYR, Benjamin, 4020 Linz (AT); FASSBENDER, Pascal, 41066 Mönchengladbach (DE); MOSER, Richard, 5163 Palting (AT); KIRCHNER, Cornelius, 5020 Salzburg (AT); HÖLLER, Florian, 5162 Obertrum (AT)
(74) Vertreter: Torggler & Hofmann Patentanwälte - Innsbruck

(57) **Zusammenfassung**

Verfahren zur Konfiguration zumindest einer Arbeitsfunktion einer Hebevorrichtung (1), wobei
- ein Vorkonfigurieren (i) zumindest einer Arbeitsfunktion der Hebevorrichtung (1) über eine erste Benutzerschnittstelle (21) auf einem ersten Endgerät (11) erfolgt
- ein Versenden (ii) der Vorkonfiguration der zumindest einen Arbeitsfunktion der Hebevorrichtung (1) von dem ersten Endgerät (11) an eine Konfigurationsschnittstelle (3) einer Steuerung (2) der Hebevorrichtung (1) erfolgt
- ein Empfangen (iii) der Vorkonfiguration der zumindest einen Arbeitsfunktion der Hebevorrichtung (1) durch die Konfigurationsschnittstelle (3) der Steuerung (2) der Hebevorrichtung (1) erfolgt
- ein Konfigurieren (iv) der zumindest einen Arbeitsfunktion der Hebevorrichtung (1) durch die Steuerung (2) der Hebevorrichtung (1) gemäß der empfangenen Vorkonfiguration erfolgt

## Beschreibung

Die Erfindung betrifft ein Verfahren zur Konfiguration zumindest einer Arbeitsfunktion einer Hebevorrichtung, eine Anordnung aus einer Steuerung einer Hebevorrichtung und einem ersten Endgerät zur Durchführung eines solchen Verfahrens, ein Computerprogrammprodukt zur Ausführung eines solchen Verfahrens und eine Hebevorrichtung mit einer solchen Anordnung.

Im Stand der Technik sind Verfahren zur Konfiguration zumindest einer Arbeitsfunktion einer Hebevorrichtung bekannt, bei welchen eine Arbeitsfunktion der Hebevorrichtung über eine Steuerung der Hebevorrichtung konfigurierbar ist. Ein Betrieb der Hebevorrichtung kann grundsätzlich durch eine der Hebevorrichtung zugeordnete Steuerung durch eine Ansteuerung von Aktuatoren der Hebevorrichtung erfolgen. Durch Abgabe von Bedienbefehlen durch einen Benutzer an die Steuerung können dabei beispielsweise einzelne Aktuatoren der Hebevorrichtung gezielt durch entsprechende Steuerbefehle angesteuert werden. Eine Durchführbarkeit einer Arbeitsfunktion der Hebevorrichtung kann bei im Stand der Technik bekannten Verfahren durch einen Benutzer über eine Benutzerschnittstelle der Steuerung an der Hebevorrichtung konfiguriert werden. Dies erfordert nachteilig einen unmittelbaren Zugang zur Benutzerschnittstelle der Steuerung an der Hebevorrichtung.

Aufgabe der Erfindung ist es, ein verbessertes Verfahren zur Konfiguration zumindest einer Arbeitsfunktion einer Hebevorrichtung, eine Anordnung aus einer Steuerung einer Hebevorrichtung und einem ersten Endgerät zur Durchführung eines solchen Verfahrens, ein Computerprogrammprodukt zur Ausführung eines solchen Verfahrens und eine Hebevorrichtung mit einer solchen Anordnung anzugeben. Vorzugsweise soll ermöglicht werden, eine Konfiguration zumindest einer Arbeitsfunktion einer Hebevorrichtung ohne einen unmittelbaren Zugang zu einer Benutzerschnittstelle einer Steuerung an einer Hebevorrichtung vornehmen zu können.

Diese Aufgabe wird durch ein Verfahren zur Konfiguration zumindest einer Arbeitsfunktion einer Hebevorrichtung mit den Merkmalen des Anspruchs 1, eine Anordnung aus einer Steuerung einer Hebevorrichtung und einem ersten Endgerät zur Durchführung eines solchen Verfahrens, ein Computerprogrammprodukt zur Ausführung eines solchen Verfahrens und eine Hebevorrichtung mit einer solchen Anordnung gelöst.

Vorteilhafte Ausführungen der Erfindung sind in den abhängigen Ansprüchen angegeben.

Bei dem Verfahren zur Konfiguration zumindest einer Arbeitsfunktion einer Hebevorrichtung kann ein Vorkonfigurieren zumindest einer Arbeitsfunktion der Hebevorrichtung über eine erste Benutzerschnittstelle auf einem ersten Endgerät erfolgen. Dabei kann beispielsweise aus dem Umfang von für eine Ausführung der Hebevorrichtung grundsätzlich vorhandenen Arbeitsfunktionen eine Auswahl einer oder der für einen Benutzer der Hebevorrichtung durchführbaren Arbeitsfunktion oder Arbeitsfunktionen, und/oder ein Ausmaß der Nutzbarkeit der für einen Benutzer der Hebevorrichtung durchführbaren Arbeitsfunktion oder Arbeitsfunktionen konfiguriert werden.

Ein erstes Endgerät kann grundsätzlich Geräte umfassen, die an einen Netzanschluss eines Daten- oder Telekommunikationsnetzes angeschlossen sind und mit einer Steuerung einer Hebevorrichtung in Datenverbindung stehen oder bringbar sind. Ein erstes Endgerät kann beispielsweise als ein durch einen Benutzer über eine erste Benutzerschnittstelle bedienbarer Personal Computer, ein Tablet oder ein Smartphone ausgebildet sein.

Ein erstes Endgerät kann grundsätzlich baulich und gegebenenfalls geografisch getrennt von der Steuerung der Hebevorrichtung ausgebildet sein. Ein erstes Endgerät muss im Gegensatz zur Steuerung der Hebevorrichtung beispielsweise nicht zur Steuerung einer Arbeitsfunktion der Hebevorrichtung ausgebildet sein.

Ein Vorkonfigurieren zumindest einer Arbeitsfunktion der Hebevorrichtung kann grundsätzlich über mehrere erste Endgeräte mit entsprechenden ersten Benutzerschnittstellen erfolgen.

Eine erste Benutzerschnittstelle eines ersten Endgeräts kann menügeführt und/oder mit einer Eingabemaske in Form einer Benutzerführung mit grafischer, zeichenorientierter oder sprachorientierter Benutzeroberfläche ausgeführt sein. Über eine erste Benutzerschnittstelle kann eine Auswahl aus einem Umfang von für eine Ausführung der Hebevorrichtung grundsätzlich vorhandenen Arbeitsfunktionen getroffen werden, und/oder ein Ausmaß der Nutzbarkeit mit der Hebevorrichtung durchführbaren Arbeitsfunktion oder Arbeitsfunktionen konfiguriert werden.

Weiter kann ein Versenden der Vorkonfiguration der zumindest einen Arbeitsfunktion der Hebevorrichtung von einem ersten Endgerät an eine Konfigurationsschnittstelle der Steuerung der Hebevorrichtung erfolgen. Dazu kann ein erstes Endgerät über zumindest einen Netzanschluss eines Daten- oder Telekommunikationsnetzes mit einer Konfigurationsschnittstelle der Steuerung der Hebevorrichtung in Datenverbindung stehen oder bringbar sein. Ein erstes Endgerät kann eine dazu geeignete, gemäß dem verwendeten Übertragungsprotokoll konfigurierte Sendeeinrichtung aufweisen.

Nach dem Versenden kann ein Empfangen der Vorkonfiguration der zumindest einen Arbeitsfunktion der Hebevorrichtung durch die Konfigurationsschnittstelle der Steuerung der Hebevorrichtung erfolgen. Eine Konfigurationsschnittstelle der Steuerung der Hebevorrichtung kann eine dazu geeignete, gemäß dem verwendeten Übertragungsprotokoll konfigurierte Empfangseinrichtung aufweisen.

Ein Konfigurieren der zumindest einen Arbeitsfunktion der Hebevorrichtung kann in weiterer Folge durch die Steuerung der Hebevorrichtung gemäß der empfangenen Vorkonfiguration erfolgen. Dabei kann eine Auswahl aus einem Umfang von für eine Ausführung der Hebevorrichtung grundsätzlich vorhandenen Arbeitsfunktionen gemäß der empfangenen Vorkonfiguration in der Steuerung hinterlegt werden, und/oder ein Ausmaß der Nutzbarkeit mit der Hebevorrichtung durchführbaren Arbeitsfunktion oder Arbeitsfunktionen gemäß der empfangenen Vorkonfiguration in der Steuerung hinterlegt werden.

Eine Steuerung der Hebevorrichtung kann durch eine Ansteuerung von Aktuatoren durch von der Steuerung abgegebene Steuerbefehle erfolgen. Dabei können Aktuatoren der Hebevorrichtung gezielt auf Basis von Bedienbefehlen eines Benutzers durch entsprechende von der Steuerung ausgegebene Steuerbefehle angesteuert werden. Die Steuerung kann eine geeignete Benutzerschnittstelle oder Mensch-Maschine-Schnittstelle zur Abgabe von Bedienbefehlen durch einen Benutzer aufweisen.

Die Steuerung kann mit einer Fernsteuerung fernbedienbar sein, wobei die Fernsteuerung zumindest eine Benutzerschnittstelle zur Abgabe von Bedienbefehlen durch einen Benutzer aufweisen kann. Auf Basis der Bedienbefehle können von der Steuerung Steuerbefehle für die Ansteuerung der Hebevorrichtung generiert werden.

Die Steuerung kann grundsätzlich wenigstens eine Recheneinheit und wenigstens eine Speichereinheit aufweisen. Die Recheneinheit kann mit der Speichereinheit in einer Datenverbindung stehen oder in eine solche bringbar sein.

Bei einem Konfigurieren der zumindest einen Arbeitsfunktion der Hebevorrichtung kann eine Auswahl aus einem Umfang von für eine Ausführung der Hebevorrichtung grundsätzlich vorhandenen Arbeitsfunktionen gemäß der empfangenen Vorkonfiguration in einem Speicher der Steuerung hinterlegt werden, und/oder ein Ausmaß der Nutzbarkeit mit der Hebevorrichtung durchführbaren Arbeitsfunktion oder Arbeitsfunktionen gemäß der empfangenen Vorkonfiguration in einem Speicher der Steuerung hinterlegt werden.

Eine Ausführung oder Ausführbarkeit von Bedienbefehlen eines Benutzers durch entsprechende von der Steuerung ausgegebene Steuerbefehle kann in Abhängigkeit der in einem Speicher der Steuerung hinterlegten Vorkonfiguration erfolgen.

Bei dem Vorkonfigurieren der zumindest einen Arbeitsfunktion über die erste Benutzerschnittstelle auf dem ersten Endgerät kann zumindest ein erster digitaler Konfigurationsbefehl erstellt werden. Ein Versenden des zumindest einen ersten digitalen Konfigurationsbefehls der Vorkonfiguration kann gemäß einem erstem Datenübertagungsprotokoll erfolgen.

Bei dem Vorkonfigurieren zumindest einer Arbeitsfunktion der Hebevorrichtung über die erste Benutzerschnittstelle auf einem ersten Endgerät kann durch eine Interaktion mit der ersten Benutzerschnittstelle durch den Benutzer, vorzugsweise menügeführt und/oder über eine Eingabemaske des ersten Endgeräts, zumindest ein erster digitaler Konfigurationsbefehl erstellt werden.

Ein erster digitaler Konfigurationsbefehl kann Daten zu einer Auswahl einer oder der für einen Benutzer der Hebevorrichtung durchführbaren Arbeitsfunktion oder Arbeitsfunktionen, und/oder ein Ausmaß der Nutzbarkeit der für einen Benutzer der Hebevorrichtung durchführbaren Arbeitsfunktion oder Arbeitsfunktionen umfassen.

Ein erster digitaler Konfigurationsbefehl kann Daten zu einer Berechtigung zum Adaptieren einer Konfiguration der zumindest einen Arbeitsfunktion durch ein weiteres, insbesondere ein zweites, Endgerät umfassen. Daten zu einer Berechtigung zum Adaptieren einer Konfiguration können beispielsweise eine Erlaubbarkeit zum Konfigurieren der zumindest einen Arbeitsfunktion, eine Erlaubbarkeit einer Inbetriebnahme mit einer Ausführung von Arbeitsfunktionen der Hebevorrichtung und/oder einen Umfang von auswählbaren und konfigurierbaren Arbeitsfunktion umfassen.

Ein digitaler Konfigurationsbefehl kann allgemein ein digital codiertes Datenpaket sein, welches von einer Empfangseinrichtung der Steuerung der Hebevorrichtung und/oder einer Empfangseinrichtung eines ersten und/oder zweiten Endgeräts empfangbar ist. Die digitale Codierung und die Übertragung eines Konfigurationsbefehls können gemäß einem oder mehrerer Übertragungsprotokolle erfolgen, wobei nicht ausgeschlossen ist, dass die Übertragungsprotokolle bekannten Standards entsprechen können.

Ein digitaler Konfigurationsbefehl kann allgemein Daten zur Konfiguration einer oder mehrerer Arbeitsfunktionen der Hebevorrichtung umfassen.

Ein Versenden des zumindest einen ersten digitalen Konfigurationsbefehls kann gemäß einem erstem Datenübertagungsprotokoll zumindest teilweise gemäß einem Funkübertragungsprotokoll gemäß IEEE 802.11 Standard und/oder zumindest teilweise gemäß einem kabelgebundenen Übertragungsprotokoll gemäß Ethernet Standard und/oder zumindest teilweise gemäß einem Funkübertragungsprotokoll gemäß Mobilfunkstandard erfolgen.

Entsprechend kann ein Empfang eines ersten digitalen Konfigurationsbefehls durch eine Konfigurationsschnittstelle der Steuerung der Hebevorrichtung gemäß einem erstem Datenübertagungsprotokoll zumindest teilweise gemäß einem Funkübertragungsprotokoll gemäß IEEE 802.11 Standard und/oder zumindest teilweise gemäß einem kabelgebundenen Übertragungsprotokoll gemäß Ethernet Standard und/oder zumindest teilweise gemäß einem Funkübertragungsprotokoll gemäß Mobilfunkstandard erfolgen.

In einer bevorzugten Ausführung des Verfahrens kann ein Adaptieren der Konfiguration der zumindest einen Arbeitsfunktion der Hebevorrichtung über eine zweite Benutzerschnittstelle auf einem zweiten Endgerät erfolgen.

Ein zweites Endgerät kann grundsätzlich Geräte umfassen, die an einen Netzanschluss eines Daten- oder Telekommunikationsnetzes angeschlossen sind und mit einer Steuerung einer Hebevorrichtung und/oder einem ersten Endgerät in Datenverbindung stehen oder bringbar sind. Ein zweites Endgerät kann beispielsweise als ein durch einen Benutzer über eine zweite Benutzerschnittstelle bedienbarer Personal Computer, ein Tablet oder ein Smartphone ausgebildet sein.

Ein zweites Endgerät kann grundsätzlich baulich und gegebenenfalls geografisch getrennt von der Steuerung der Hebevorrichtung und/oder einem ersten Endgerät ausgebildet sein. Ein zweites Endgerät muss im Gegensatz zur Steuerung der Hebevorrichtung beispielsweise nicht zur Steuerung einer Arbeitsfunktion der Hebevorrichtung ausgebildet sein.

Ein Adaptieren der Konfiguration der zumindest einer Arbeitsfunktion der Hebevorrichtung kann grundsätzlich über mehrere zweite Endgeräte mit entsprechenden zweiten Benutzerschnittstellen erfolgen.

Bei dem Adaptieren der Konfiguration der zumindest einen Arbeitsfunktion der Hebevorrichtung kann beispielsweise aus dem Umfang von für eine Ausführung der Hebevorrichtung grundsätzlich vorhandenen Arbeitsfunktionen eine Auswahl einer oder der für einen Benutzer der Hebevorrichtung durchführbaren Arbeitsfunktion oder Arbeitsfunktionen, und/oder ein Ausmaß der Nutzbarkeit der für einen Benutzer der Hebevorrichtung durchführbaren Arbeitsfunktion oder Arbeitsfunktionen konfiguriert werden.

In einer Ausführung des Verfahrens kann bei dem Adaptieren der Konfiguration der zumindest einen Arbeitsfunktion der Hebevorrichtung aus dem gemäß einer Vorkonfiguration vorhandenen Umfang von Arbeitsfunktionen eine Auswahl getroffen werden, und/oder ein Ausmaß der Nutzbarkeit der gemäß einer Vorkonfiguration durchführbaren Arbeitsfunktion oder Arbeitsfunktionen konfiguriert werden.

Eine zweite Benutzerschnittstelle eines zweiten Endgeräts kann menügeführt und/oder mit einer Eingabemaske in Form einer Benutzerführung mit grafischer, zeichenorientierter oder sprachorientierter Benutzeroberfläche ausgeführt sein. Über eine zweite Benutzerschnittstelle kann eine Auswahl zumindest einer Arbeitsfunktion getroffen werden, und/oder ein Ausmaß der Nutzbarkeit zumindest einer Arbeitsfunktion konfiguriert werden.

Weiter kann ein Versenden einer adaptierten Konfiguration der zumindest einen Arbeitsfunktion der Hebevorrichtung von einem zweiten Endgerät an eine Konfigurationsschnittstelle der Steuerung der Hebevorrichtung erfolgen. Dazu kann ein zweites Endgerät über zumindest einen Netzanschluss eines Daten- oder Telekommunikationsnetzes mit einer Konfigurationsschnittstelle der Steuerung der Hebevorrichtung und/oder eines ersten Endgeräts in Datenverbindung stehen oder bringbar sein. Ein zweites Endgerät kann eine dazu geeignete, gemäß dem verwendeten Übertragungsprotokoll konfigurierte Sendeeinrichtung aufweisen.

Nach dem Versenden kann ein Empfangen der adaptierten Konfiguration der zumindest einen Arbeitsfunktion der Hebevorrichtung durch eine Konfigurationsschnittstelle der Steuerung der Hebevorrichtung erfolgen. Eine Konfigurationsschnittstelle der Steuerung der Hebevorrichtung kann eine dazu geeignete, gemäß dem verwendeten Übertragungsprotokoll konfigurierte Empfangseinrichtung aufweisen.

Ein Konfigurieren der zumindest einen Arbeitsfunktion der Hebevorrichtung kann in weiterer Folge durch die Steuerung der Hebevorrichtung gemäß der empfangenen adaptierten Konfiguration erfolgen. Dabei kann eine Auswahl zumindest einer Arbeitsfunktion in der Steuerung - insbesondere in einem Speicher der Steuerung - hinterlegt werden, und/oder ein Ausmaß der Nutzbarkeit zumindest einer Arbeitsfunktion in der Steuerung - insbesondere in einem Speicher der Steuerung - hinterlegt werden.

Eine Ausführung oder Ausführbarkeit von Bedienbefehlen eines Benutzers durch entsprechende von der Steuerung ausgegebene Steuerbefehle kann in Abhängigkeit der in einem Speicher der Steuerung hinterlegten adaptierten Konfiguration erfolgen.

Es kann grundsätzlich möglich sein, eine mittels eines ersten Endgeräts mit einer Vorkonfiguration vorgenommene Konfiguration zumindest einer Arbeitsfunktion der Hebevorrichtung mittels eines zweiten Endgeräts mit einer adaptierten Konfiguration zu ändern.

Eine Steuerung der Hebevorrichtung, insbesondere eine Konfigurationsschnittstelle der Steuerung der Hebevorrichtung, kann eine Umformeinrichtung aufweisen, die eine empfangene Vorkonfiguration und/oder eine empfangene adaptierte Konfiguration in ein von einem Bussystem der Steuerung der Hebevorrichtung verarbeitbares Datenformat umwandelt. Insbesondere kann eine Umformeinrichtung eine empfangene Vorkonfiguration und/oder eine empfangene adaptierte Konfiguration in von einer Recheneinheit der Steuerung ausführbare Befehle umwandeln.

Ein Konfigurieren der zumindest einen Arbeitsfunktion der Hebevorrichtung durch die Steuerung der Hebevorrichtung gemäß der empfangenen Vorkonfiguration und/oder der empfangenen adaptierten Konfiguration kann in Abhängigkeit einer Berechtigung zum Konfigurieren der zumindest einen Arbeitsfunktion erfolgen. Dabei kann eine Berechtigungsabfrage erfolgen.

Eine Berechtigung zum Konfigurieren der zumindest einen Arbeitsfunktion kann grundsätzliche eine Erlaubbarkeit zum Konfigurieren zumindest einen Arbeitsfunktion, eine Erlaubbarkeit einer Inbetriebnahme mit einer Ausführung von Arbeitsfunktionen der Hebevorrichtung und/oder einen Umfang von auswählbaren und konfigurierbaren Arbeitsfunktion umfassen.

Eine Berechtigung zum Konfigurieren der zumindest einen Arbeitsfunktion kann umfassen, dass ein Konfigurieren gemäß der empfangenen Vorkonfiguration und/oder der empfangenen adaptierten Konfiguration nur entsprechend vorbestimmten oder vorbestimmbaren Endgeräten gewährt wird.

Eine Berechtigung zum Konfigurieren der zumindest einen Arbeitsfunktion kann umfassen, dass ein Konfigurieren gemäß der empfangenen Vorkonfiguration und/oder der empfangenen adaptierten Konfiguration nur auf einen vorbestimmten oder vorbestimmbaren Zeitpunkt, eine vorbestimmte oder vorbestimmbare Zeitdauer und/oder an einem vorbestimmten oder vorbestimmbaren Standort gewährt wird.

Daten zur Berechtigung zum Konfigurieren der zumindest einen Arbeitsfunktion können auf einem ersten Endgerät und/oder einem zweiten Endgerät hinterlegt werden.

Daten zur Berechtigung zum Konfigurieren der zumindest einen Arbeitsfunktion können in der Steuerung, beispielsweise in einem Speicher der Steuerung und/oder in einem Speicher einer Konfigurationsschnittstelle der Steuerung der Hebevorrichtung, hinterlegt sein.

Daten zur Berechtigung können beispielsweise digitale Lizenzen, digitale Zertifikate, Daten zu Passwörtern und/oder biometrische Daten von Benutzern von Endgeräten umfassen.

Eine Darstellung der zweiten Benutzerschnittstelle kann in Abhängigkeit einer Berechtigung zum Konfigurieren der zumindest einen Arbeitsfunktion erfolgen. In einer menügeführten Ausbildung und/oder einer Ausbildung mit einer Eingabemaske einer zweiten Benutzerschnittstelle eines zweiten Endgeräts kann beispielsweise die durch einen Benutzer treffbare Auswahl zumindest einer Arbeitsfunktion und/oder ein durch einen Benutzer konfigurierbares Ausmaß der Nutzbarkeit zumindest einer Arbeitsfunktion entsprechend der für ein zweites Endgerät und/oder einen Benutzer geltenden Berechtigung zum Konfigurieren der zumindest einen Arbeitsfunktion erfolgen.

Analog dazu kann eine Darstellung der ersten Benutzerschnittstelle auf einem ersten Endgerät in Abhängigkeit einer Berechtigung zum Konfigurieren der zumindest einen Arbeitsfunktion erfolgen.

Grundsätzlich kann eine Ausführung einer konfigurierten Arbeitsfunktion von einer Sicherheitsüberwachung der Steuerung der Hebevorrichtung überwacht werden. Dabei können maximal zulässige Grenzwerte, gegebenenfalls unter Einbeziehung der momentanen Hublastsituation, für Werte von Freiheitsgraden und/oder auf die Hebevorrichtung wirkende Kräfte und Momente überwacht werden. Eine Ausführung einer Arbeitsfunktion, beispielsweise bei einer Bewegung des Armsystems oder einem Hubvorgang, kann zur Einhaltung von Grenzwerten durch die Sicherheitsüberwachung der Steuerung verhindert werden. Grenzwerte können vorgegeben oder durch die Steuerung vorgebbar sein und in einer Speichereinheit der Steuerung hinterlegt sein. Eine Sicherheitsüberwachung der Steuerung kann beispielsweise eine Standsicherheitsüberwachung der Hebevorrichtung durchführen. Es kann vorgesehen sein, dass eine Sicherheitsüberwachung der Steuerung die Ausführung eines Bedienbefehls, durch welchen Steuerbefehle für die Ansteuerung von Aktuatoren generierbar sein können, verhindert, beispielsweise um die Standsicherheit der Hebevorrichtung zu gewährleisten.

Bei dem Adaptieren der Konfiguration der zumindest einen Arbeitsfunktion über die zweite Benutzerschnittstelle auf einem zweiten Endgerät kann zumindest ein zweiter digitaler Konfigurationsbefehl erstellt werden, wobei ein Versenden eines zweiten digitalen Konfigurationsbefehls einer adaptierten Konfiguration gemäß einem zweiten Datenübertagungsprotokoll erfolgen kann.

Bei dem Adaptieren der Konfiguration der zumindest einen Arbeitsfunktion der Hebevorrichtung über die zweite Benutzerschnittstelle auf einem zweiten Endgerät kann durch eine Interaktion mit der zweiten Benutzerschnittstelle durch den Benutzer menügeführt und/oder über eine Eingabemaske des zweiten Endgeräts zumindest ein zweiter digitaler Konfigurationsbefehl erstellt werden.

Auf einem zweiten Endgerät kann durch eine Interaktion mit der zweiten Benutzerschnittstelle durch den Benutzer über
- einen berührempfindlichen Bildschirm eines zweiten Endgeräts, und/oder
- eine manuell bedienbare Eingabevorrichtung wie eine Tastatur und/oder Computermaus, und/oder
- eine Spracheingabe in eine Spracherkennungsvorrichtung eines zweiten Endgeräts, und/oder
- eine durch einen Benutzer ausführbare Gestensteuerung - beispielsweise realisiert mit Sensoren wie Infrarot- oder Ultraschallsensoren oder einer Kamera - eines zweiten Endgeräts
zumindest ein zweiter digitaler Konfigurationsbefehl erstellt werden.

Ein zweiter digitaler Konfigurationsbefehl kann Daten zu einer Auswahl einer oder der für einen Benutzer der Hebevorrichtung durchführbaren Arbeitsfunktion oder Arbeitsfunktionen, und/oder ein Ausmaß der Nutzbarkeit der für einen Benutzer der Hebevorrichtung durchführbaren Arbeitsfunktion oder Arbeitsfunktionen umfassen.

Ein zweiter digitaler Konfigurationsbefehl kann Daten zu einer Berechtigung zum Adaptieren einer Konfiguration der zumindest einen Arbeitsfunktion durch das zweite Endgerät umfassen.

Ein Versenden gemäß einem zweiten Datenübertagungsprotokoll kann zumindest teilweise gemäß einem Funkübertragungsprotokoll gemäß IEEE 802.11 Standard und/oder zumindest teilweise gemäß einem Funkübertragungsprotokoll gemäß Bluetooth Standard und/oder zumindest teilweise gemäß einem Funkübertragungsprotokoll gemäß Mobilfunkstandard erfolgen. Bevorzugt kann ein Versenden zumindest teilweise gemäß einem Bluetooth Low Energy Funkübertragungsprotokoll erfolgen.

Ein Versenden gemäß einem zweiten Datenübertagungsprotokoll kann vorteilhaft nur über ein Funkübertragungsprotokoll erfolgen.

Ein Empfang des zumindest einen zweiten digitalen Konfigurationsbefehls durch eine Konfigurationsschnittstelle der Steuerung der Hebevorrichtung gemäß dem zweiten Datenübertagungsprotokoll kann zumindest teilweise gemäß einem Funkübertragungsprotokoll gemäß IEEE 802.11 Standard und/oder zumindest teilweise gemäß einem Funkübertragungsprotokoll gemäß Bluetooth Standard und/oder zumindest teilweise gemäß einem Funkübertragungsprotokoll gemäß Mobilfunkstandard erfolgen. Bevorzugt kann ein Empfang zumindest teilweise gemäß einem Bluetooth Low Energy Funkübertragungsprotokoll erfolgen.

In einer Ausführung des Verfahrens kann ein Versenden der Vorkonfiguration der zumindest einen Arbeitsfunktion der Hebevorrichtung von einem ersten Endgerät und/oder der Konfigurationsschnittstelle der Steuerung der Hebevorrichtung an ein zweites Endgerät erfolgen.

Ein Versenden der Vorkonfiguration an ein zweites Endgerät kann in Form eines dritten digitalen Konfigurationsbefehls erfolgen.

Ein solcher dritter digitaler Konfigurationsbefehl kann Daten zu einer Berechtigung zum Adaptieren einer Konfiguration der zumindest einen Arbeitsfunktion durch ein zweites Endgerät umfassen. Daten zu einer Berechtigung zum Adaptieren einer Konfiguration können beispielsweise eine Erlaubbarkeit zum Konfigurieren zumindest einen Arbeitsfunktion, eine Erlaubbarkeit einer Inbetriebnahme mit einer Ausführung von Arbeitsfunktionen der Hebevorrichtung und/oder einen Umfang von auswählbaren und konfigurierbaren Arbeitsfunktion umfassen.

Eine Darstellung einer zweiten Benutzerschnittstelle kann in Abhängigkeit solcher Daten zu einer Berechtigung zum Konfigurieren der zumindest einen Arbeitsfunktion erfolgen.

Ein Versenden, sowie auch der Empfang, kann gemäß einem dritten Datenübertagungsprotokoll zumindest teilweise gemäß einem Funkübertragungsprotokoll gemäß IEEE 802.11 Standard und/oder zumindest teilweise gemäß einem Funkübertragungsprotokoll gemäß Bluetooth Standard und/oder zumindest teilweise gemäß einem Funkübertragungsprotokoll gemäß Mobilfunkstandard erfolgt. Bevorzugt kann ein Versenden, sowie auch ein Empfang, zumindest teilweise gemäß einem Bluetooth Low Energy Funkübertragungsprotokoll erfolgen.

Bei einem Konfigurieren der zumindest einen Arbeitsfunktion, sei es gemäß einer Vorkonfiguration oder einer adaptierten Konfiguration, kann eine Auswahl zumindest einer Arbeitsfunktion getroffen werden, und/oder ein Ausmaß der Nutzbarkeit zumindest einer Arbeitsfunktion konfiguriert werden. Dies kann durch ein zumindest teilweises Freischalten und/oder zumindest teilweises Beschränken einer Arbeitsfunktion der Hebevorrichtung erfolgen.

Es kann ein zumindest teilweises Freischalten und/oder zumindest teilweises Beschränken zumindest einer Assistenzfunktion zum zumindest teilautomatisierten Betrieb der Hebevorrichtung erfolgen.

Eine Assistenzfunktion kann eine Koordinatensteuerung (auch "boom tip control" genannt) der Hebevorrichtung umfassen. Dabei können Aktuatoren eines Armsystems der Hebevorrichtung von der Steuerung so angesteuert werden, dass der Benutzer das Verhalten einer Kranspitze des Armsystems steuert, anstatt wie gewöhnlich die einzelnen Aktuatoren selbst anzusteuern.

Eine Assistenzfunktion kann einen zumindest teilautomatisierten Bewegungsmodus der Hebevorrichtung umfassen, bei welchem die die Geometrie eines Armsystems der Hebevorrichtung von der Steuerung der Hebevorrichtung in einer vorbestimmten Abfolge an Bewegungen verändert wird. Dabei kann eines Armsystems der Hebevorrichtung von der Steuerung zumindest teilautomatisiert aus einer Parkierposition in eine Arbeitsposition, oder umgekehrt, bewegt werden.

Eine Assistenzfunktion kann einen zumindest teilautomatisierten Bewegungsmodus der Hebevorrichtung umfassen. Dabei kann ausgehend von einer vorherrschenden, im Wesentlichen frei wählbaren, Geometrie eines Armsystems der Hebevorrichtung von der Steuerung der Hebevorrichtung zumindest teilautomatisiert eine Bewegung in zumindest eine in einem Speicher der Steuerung gespeicherte, vorgegebene oder vorgebbare Geometrie eines Armsystems der Hebevorrichtung gesteuert werden.

Eine Assistenzfunktion kann eine von der Steuerung durchgeführte Schwingungsdämpfung einer Bewegung der Hebevorrichtung umfassen.

Es kann ein zumindest teilweises Freischalten und/oder zumindest teilweises Beschränken zumindest einer Arbeitsfunktion zum Manipulieren eines Arbeitsgeräts der Hebevorrichtung erfolgen. Dabei kann die eine Verwendbarkeit zumindest einer Arbeitsfunktion eines Arbeitsgeräts der Hebevorrichtung zumindest teilweise freigeschaltet werden, und/oder ein Ausmaß der Nutzbarkeit zumindest einer Arbeitsfunktion eines Arbeitsgeräts der Hebevorrichtung beschränkt werden.

Es kann ein zumindest teilweises Freischalten und/oder zumindest teilweises Beschränken zumindest einer Arbeitsfunktion zum Manipulieren einer von der Hebevorrichtung angehobenen oder anzuhebenden Last erfolgen. Dabei kann eine Momentenbelastung einer von der Hebevorrichtung angehobenen oder anzuhebenden Last beschränkt werden.

Es kann ein zumindest teilweises Freischalten und/oder zumindest teilweises Beschränken zumindest einer verfügbaren Leistungen eines Arbeitsgeräts und/oder eines Antriebs der Hebevorrichtung erfolgen. Ein Antrieb kann eine Aktuator und/oder einen Fahrantrieb der Hebevorrichtung umfassen.

Eine verfügbare Leistungen eines Arbeitsgeräts und/oder eines Antriebs der Hebevorrichtung kann zumindest einen der folgenden Aspekte umfassen:
- eine Nutzungsdauer und/oder einen Zeitpunkt zur Nutzung
- eine maximale Arbeitshöhe und/oder Hubhöhe eines Arbeitsgeräts der Hebevorrichtung und/oder einer angehobenen oder anzuhebenden Last
- eine maximale seitliche Reichweite eines Arbeitsgeräts der Hebevorrichtung und/oder einer angehobenen oder anzuhebenden Last
- eine Geschwindigkeit eines mit der Hebevorrichtung bewegten Arbeitsgeräts der Hebevorrichtung und/oder einer mit der Hebevorrichtung bewegten angehobenen oder anzuhebenden Last
- Start- und Stopprampen von Bewegungen der Hebevorrichtung
- Kennlinien von Bedienelementen einer Benutzerschnittstelle zur Abgabe von Bedienbefehlen durch einen Benutzer
- Leistungsparameter von Aktuatoren der Hebevorrichtung

Es kann ein zumindest teilweises Freischalten und/oder zumindest teilweises Beschränken zumindest eines Freiheitsgrad der Bewegung eines Armsystems der Hebevorrichtung erfolgen. Freiheitsgrade der Bewegung eines Armsystems der Hebevorrichtung können grundsätzlich Winkel von Armen des Armsystems zueinander und Längen von längenveränderbaren Armen umfassen. Ein Armsystem kann durch eine drehbare Lagerung in einer Basis einen Freiheitsgrad der Rotation ausweisen.

Ein zumindest teilweises Freischalten und/oder zumindest teilweises Beschränken kann eine grundsätzliche Bewegbarkeit entlang zumindest eines Freiheitsgrades umfassen.

Ein zumindest teilweises Freischalten und/oder zumindest teilweises Beschränken zumindest eines Freiheitsgrad der Bewegung eines Armsystems der Hebevorrichtung kann ein zumindest teilweises Freischalten und/oder zumindest teilweises Beschränken zumindest eines Werts und/oder zumindest einer Änderungsrate zumindest eines Winkels von Armen des Armsystems zueinander und/oder zumindest einer Länge von längenveränderbaren Armen auf zumindest einen Minimalwert, zumindest einen Maximalwert und/oder auf zumindest ein Intervall umfassen.

Durch entsprechend zusammengesetzte Minimalwerte, Maximalwerte und/oder Intervalle für Werte und/oder Änderungsraten kann in einer beispielhaften Ausführung ein zumindest teilweises Freischalten und/oder zumindest teilweises Beschränken
- einer maximalen Arbeitshöhe und/oder Hubhöhe eines Arbeitsgeräts der Hebevorrichtung und/oder einer angehobenen oder anzuhebenden Last
- einer maximalen seitliche Reichweite und/oder Auslagerung eines Arbeitsgeräts der Hebevorrichtung und/oder einer angehobenen oder anzuhebenden Last, und/oder
- einer Geschwindigkeit eines mit der Hebevorrichtung bewegten Arbeitsgeräts der Hebevorrichtung und/oder einer mit der Hebevorrichtung bewegten angehobenen oder anzuhebenden Last erfolgen.

Schutz wird auch begehrt für eine Anordnung aus einer Steuerung einer Hebevorrichtung und einem ersten Endgerät, die zum zuvor beschriebenen Vorkonfigurieren zumindest einer Arbeitsfunktion der Hebevorrichtung konfiguriert ist.

Eine solche Anordnung kann beispielsweise aus zumindest einer an einer Hebevorrichtung angeordneten oder anordenbaren Steuerung und zumindest einem von der Steuerung getrennt ausgebildeten ersten Endgerät, etwa in Form eines Computer, Tablets oder Smartphones, ausgebildet sein.

Dabei kann ein erstes Endgerät der Anordnung zum Vorkonfigurieren zumindest einer Arbeitsfunktion der Hebevorrichtung über eine erste Benutzerschnittstelle auf einem ersten Endgerät konfiguriert sein.

Ein erstes Endgerät der Anordnung kann weiter zum Versenden der Vorkonfiguration der zumindest einen Arbeitsfunktion der Hebevorrichtung von dem ersten Endgerät an eine Konfigurationsschnittstelle der Steuerung der Hebevorrichtung konfiguriert sein.

In der Anordnung kann eine Steuerung der Hebevorrichtung zum Empfangen der Vorkonfiguration der zumindest einen Arbeitsfunktion der Hebevorrichtung durch eine Konfigurationsschnittstelle der Steuerung der Hebevorrichtung konfiguriert sein.

Eine Steuerung der Anordnung kann zum Konfigurieren der zumindest einen Arbeitsfunktion der Hebevorrichtung durch die Steuerung der Hebevorrichtung gemäß der empfangenen Vorkonfiguration konfiguriert sein.

In einer Weiterbildung der Anordnung kann diese ein zweites Endgerät umfassen, wobei die Anordnung in dieser Ausführung zum zuvor beschriebenen Adaptieren der Konfiguration der zumindest einen Arbeitsfunktion der Hebevorrichtung konfiguriert sein kann.

Eine solche Anordnung kann beispielsweise aus zumindest einer an einer Hebevorrichtung angeordneten oder anordenbaren Steuerung, zumindest einem von der Steuerung getrennt ausgebildeten ersten Endgerät in Form eines Computer, Tablets oder Smartphones und zumindest einem davon getrennt ausgebildeten zweiten Endgerät in Form eines Computer, Tablets oder Smartphones ausgebildet sein.

Dabei kann ein erstes Endgerät der Anordnung zum Adaptieren der Konfiguration der zumindest einen Arbeitsfunktion der Hebevorrichtung über eine zweite Benutzerschnittstelle auf einem zweiten Endgerät konfiguriert sein.

Ein zweites Endgerät der Anordnung kann weiter zum Versenden der adaptierten Konfiguration der zumindest einen Arbeitsfunktion der Hebevorrichtung von dem zweiten Endgerät an eine Konfigurationsschnittstelle der Steuerung der Hebevorrichtung konfiguriert sein.

In der Anordnung kann eine Steuerung der Hebevorrichtung zum Empfangen der adaptierten Konfiguration der zumindest einen Arbeitsfunktion der Hebevorrichtung durch eine Konfigurationsschnittstelle der Steuerung der Hebevorrichtung konfiguriert sein.

Eine Steuerung der Anordnung kann zum Konfigurieren der zumindest einen Arbeitsfunktion der Hebevorrichtung durch die Steuerung der Hebevorrichtung gemäß der empfangenen adaptierten Konfiguration konfiguriert sein.

Eine Steuerung einer Hebevorrichtung, ein erstes Endgerät und ein zweites Endgerät können grundsätzlich jeweils wenigstens eine Recheneinheit und wenigstens eine Speichereinheit aufweisen. Die Recheneinheiten können mit den Speichereinheiten in einer Datenverbindung stehen oder in eine solche bringbar sein.

Eine Anordnung kann aus mehreren gegebenenfalls dezentral angeordneten Einheiten von miteinander in Datenverbindung stehenden oder bringbaren Recheneinheiten und Speichereinheiten gebildet sein.

Schutz wird auch begehrt für ein Computerprogrammprodukt, umfassend Befehle, die bewirken, dass die zuvor beschriebene, zur Durchführung eines Verfahrens zum Vorkonfigurieren zumindest einer Arbeitsfunktion der Hebevorrichtung konfigurierte Anordnung ein wie zuvor beschriebenes Verfahren zum Vorkonfigurieren zumindest einer Arbeitsfunktion der Hebevorrichtung ausführt.

Dabei können Befehle ein erstes Endgerät der Anordnung dazu veranlassen, ein Vorkonfigurieren zumindest einer Arbeitsfunktion der Hebevorrichtung über eine erste Benutzerschnittstelle auf einem ersten Endgerät auszuführen.

Weiter können Befehle ein erstes Endgerät der Anordnung dazu veranlassen, ein Versenden der Vorkonfiguration der zumindest einen Arbeitsfunktion der Hebevorrichtung von dem ersten Endgerät an eine Konfigurationsschnittstelle der Steuerung der Hebevorrichtung auszuführen.

Für eine Steuerung der Anordnung können Befehle veranlassen, ein Empfangen der Vorkonfiguration der zumindest einen Arbeitsfunktion der Hebevorrichtung durch eine Konfigurationsschnittstelle der Steuerung der Hebevorrichtung auszuführen.

Weiter können Befehle eine Steuerung der Anordnung dazu veranlassen, Konfigurieren der zumindest einen Arbeitsfunktion der Hebevorrichtung durch die Steuerung der Hebevorrichtung gemäß der empfangenen Vorkonfiguration auszuführen.

Schutz wird auch begehrt für ein Computerprogrammprodukt, umfassend Befehle, die bewirken, dass die zuvor beschriebene, zur Durchführung eines Verfahrens zum Adaptieren der Konfiguration der zumindest einen Arbeitsfunktion der Hebevorrichtung konfigurierte Anordnung ein wie zuvor beschriebenes Verfahren zum Adaptieren der Konfiguration der zumindest einen Arbeitsfunktion der Hebevorrichtung ausführt.

Dabei können Befehle ein zweites Endgerät der Anordnung dazu veranlassen, ein Adaptieren der Konfiguration der zumindest einen Arbeitsfunktion der Hebevorrichtung über eine zweite Benutzerschnittstelle auf einem zweiten Endgerät auszuführen.

Weiter können Befehle ein zweites Endgerät der Anordnung dazu veranlassen, ein Versenden der adaptierten Konfiguration der zumindest einen Arbeitsfunktion der Hebevorrichtung von dem zweiten Endgerät an eine Konfigurationsschnittstelle der Steuerung der Hebevorrichtung auszuführen.

Für eine Steuerung der Anordnung können Befehle veranlassen, ein Empfangen der adaptierten Konfiguration der zumindest einen Arbeitsfunktion der Hebevorrichtung durch eine Konfigurationsschnittstelle der Steuerung der Hebevorrichtung auszuführen.

Weiter können Befehle eine Steuerung der Anordnung dazu veranlassen, ein Konfigurieren der zumindest einen Arbeitsfunktion der Hebevorrichtung durch die Steuerung der Hebevorrichtung gemäß der empfangenen adaptierten Konfiguration auszuführen.

Befehle eines Computerprogrammprodukts können allgemein eine Recheneinheit veranlassen, aus einer Speichereinheit, welche mit der Recheneinheit in einer Datenverbindung steht oder in eine solche bringbar ist, ein wie zuvor beschriebenes Verfahren auszuführen.

Befehle eines Computerprogrammprodukts können beispielsweise in wenigstens einer Speichereinheit einer Anordnung hinterlegt sein und durch wenigstens eine Recheneinheit einer Anordnung ausgeführt werden.

Ein Datenträgersignal kann ein zuvor beschriebenes Computerprogrammprodukt übertragen.

Schutz wird auch begehrt für eine Hebevorrichtung, vorzugsweise einen Ladekran, einen Knickarmkran, eine Hubarbeitsbühne, einen Gabelstapler oder Mitnahmestapler. Die Hebevorrichtung kann ein mehrere durch Aktuatoren bewegbare Arme aufweisenden Armsystem und/oder ein durch einen Aktuator bewegbares Arbeitsgerät aufweisen.

Eine Hebevorrichtung in Form einer Hubarbeitsbühne kann beispielsweise in Form eines Krans mit einem Armsystem mit schwenkbaren und längenveränderbaren Armen und einem am Armsystem bewegbar angeordneten Arbeitskorb ausgebildet sein.

Die Hebevorrichtung kann eine wie zuvor beschriebene Steuerung aufweisen, mit welcher zur Veränderung der Geometrie eines Armsystems Steuerbefehle an Aktuatoren des Armsystems und/oder ein Arbeitsgerät ausgebbar sind.

Eine wie zuvor beschriebene Hebevorrichtung kann ein Fahrwerk zum Befahren eines Untergrunds aufweisen. Damit kann eine Ausführung einer mobile Hebevorrichtung erreicht werden. Durch eine Steuerung der Hebevorrichtung können Steuersignale zum Betrieb des Fahrwerk ausgebbar sein.

Aktuatoren zur Bewegung der Hebevorrichtung und/oder eines Armsystems der Hebevorrichtung können elektrisch und/oder hydraulisch ausgebildet sein.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigt:
- Figur 1: schematisch den Ablauf eines Verfahrens zur Konfiguration zumindest einer Arbeitsfunktion einer Hebevorrichtung
- Figur 2: eine Weiterbildung des Verfahrens der Figur 1
- Figur 3: eine Ausführung des Verfahrens der Figur 2
- Figur 4: eine Ausführung eines ersten Endgeräts
- Figur 5: eine Ausführung eines zweiten Endgeräts
- Figur 6: zeigt eine besonders bevorzugte Ausführung einer Anordnung aus einer Steuerung, einem ersten Endgerät und einem zweiten Endgerät
- Figur 7: eine Ausführung einer Hebevorrichtung mit einer Steuerung

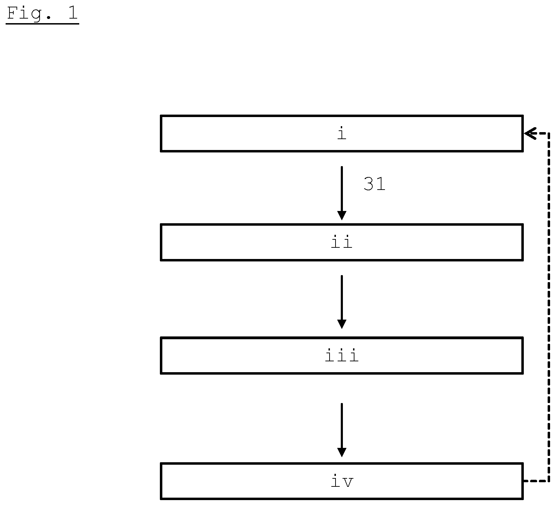

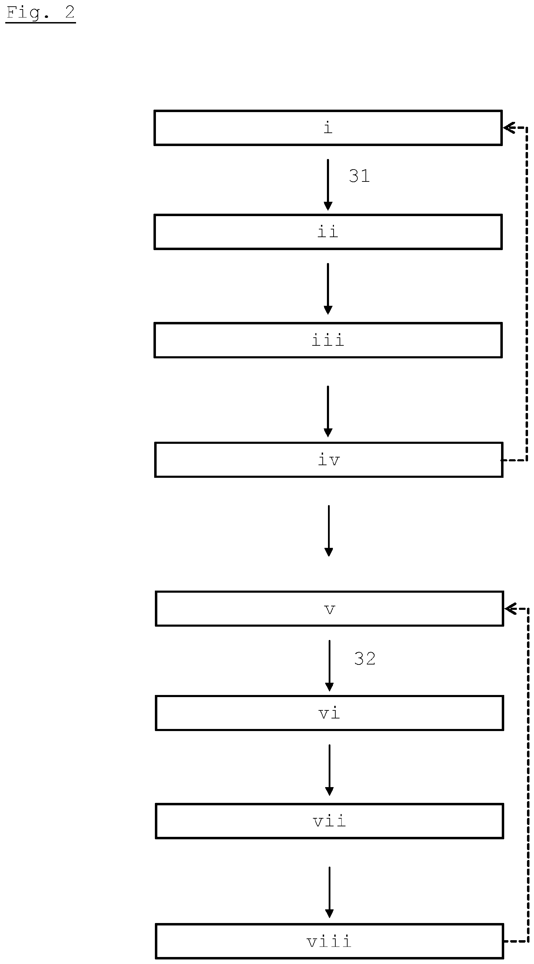

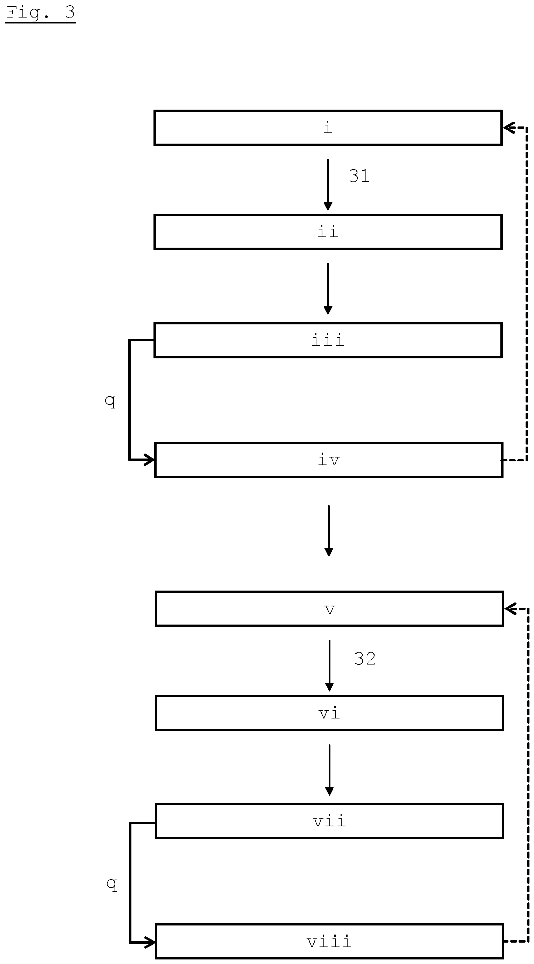

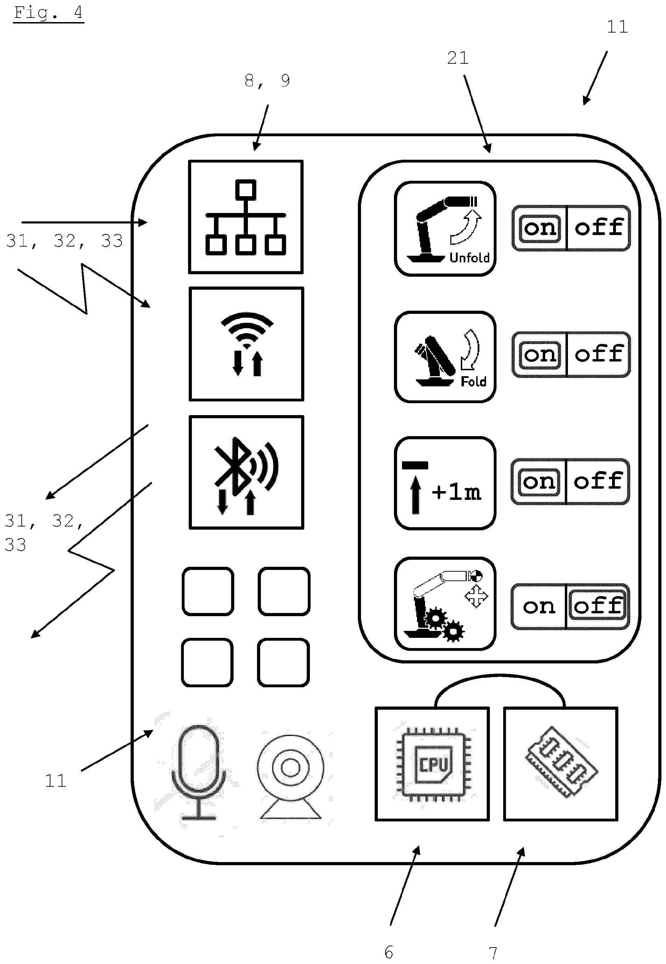

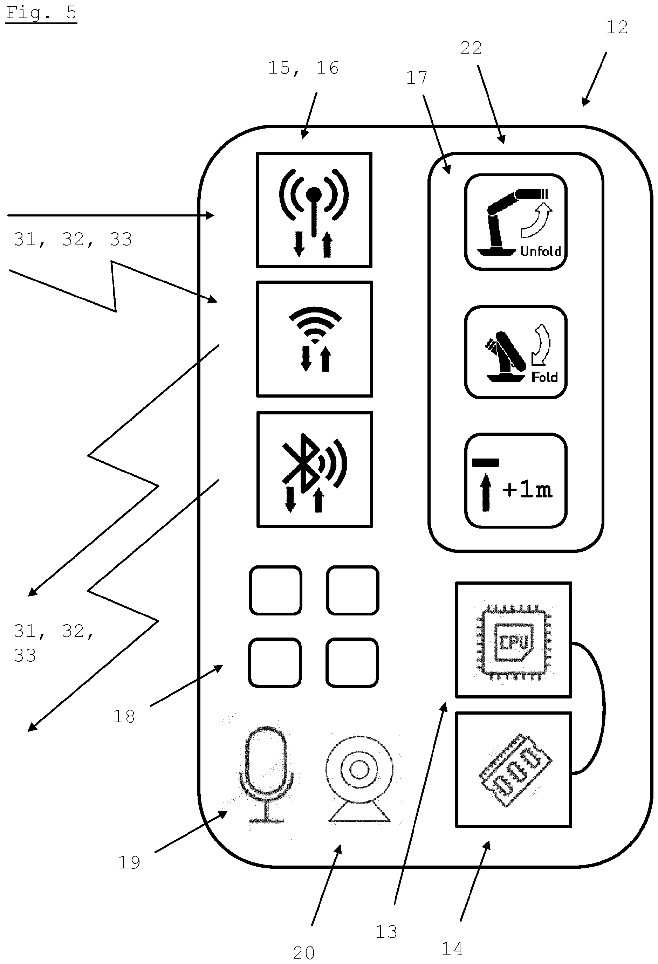

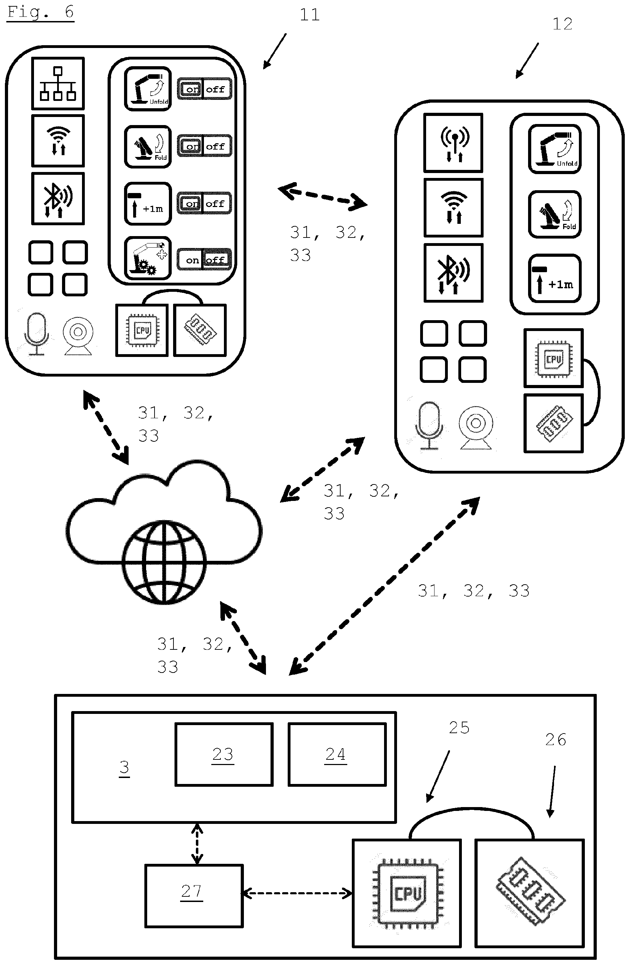

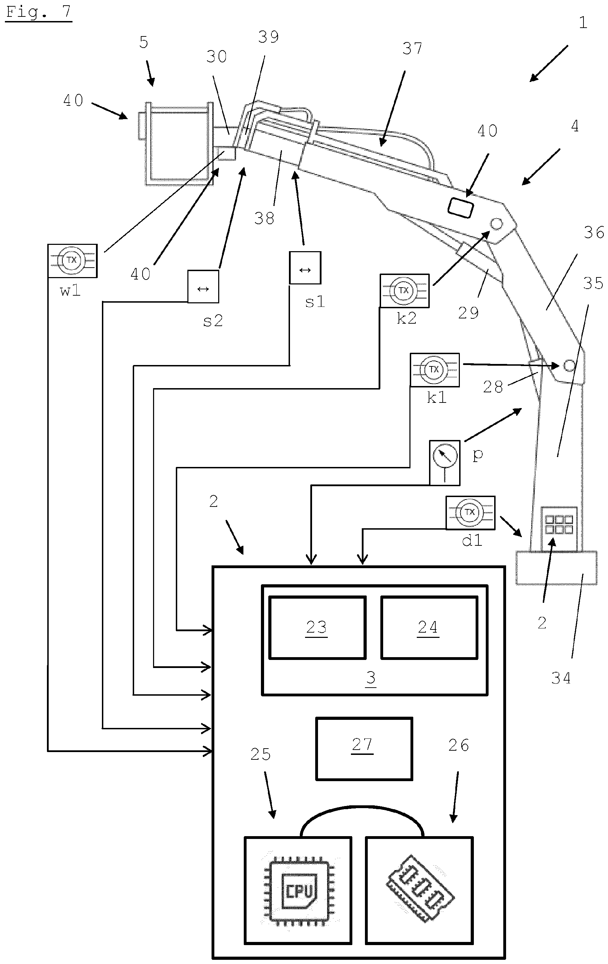

Figur 1 zeigt schematisch den Ablauf eines Verfahrens zur Konfiguration zumindest einer Arbeitsfunktion einer Hebevorrichtung 1, wobei eine Ausführung einer Hebevorrichtung 1 mit einer Steuerung 2 in Figur 7 gezeigt ist. Figur 2 zeigt schematisch eine Weiterbildung des Verfahrens der Figur 1. Figur 3 zeigt bevorzugte eine Ausführung des Verfahrens der Figur 2. Figur 4 schematisch zeigt eine Ausführung eines ersten Endgeräts 11. In Figur 5 ist eine schematische Ausführung eines zweiten Endgeräts 12 gezeigt. Figur 6 zeigt eine besonders bevorzugte Ausführung einer Anordnung aus einer Steuerung 1, einem ersten Endgerät 11 und einem zweiten Endgerät 12.

Figur 1 zeigt schematisch den Ablauf eines Verfahrens zur Konfiguration zumindest einer Arbeitsfunktion der Hebevorrichtung 1. Dabei kann ein Vorkonfigurieren i zumindest einer Arbeitsfunktion der Hebevorrichtung 1 über eine erste Benutzerschnittstelle 21 auf einem ersten Endgerät 11 erfolgen. Weiter kann ein Versenden ii der Vorkonfiguration der zumindest einen Arbeitsfunktion der Hebevorrichtung 1 von dem ersten Endgerät 11 an eine Konfigurationsschnittstelle 3 der Steuerung 2 der Hebevorrichtung 1 erfolgen, worauf ein Empfangen iii der Vorkonfiguration der zumindest einen Arbeitsfunktion der Hebevorrichtung 1 durch die Konfigurationsschnittstelle 3 der Steuerung 2 der Hebevorrichtung 1 erfolgen kann. Ein Konfigurieren iv der zumindest einen Arbeitsfunktion der Hebevorrichtung 1 durch die Steuerung 2 der Hebevorrichtung 1 kann gemäß der empfangenen Vorkonfiguration erfolgen. Die Durchführung eines solchen Verfahrens zur Konfiguration zumindest einer Arbeitsfunktion der Hebevorrichtung 1 kann im Wesentlichen beliebig oft wiederholt werden.

In Figur 2 ist eine Weiterbildung des Verfahrens der Figur 1 gezeigt. Bei einem solchen Verfahren zum Adaptieren v der Konfiguration der zumindest einen Arbeitsfunktion der Hebevorrichtung 1 kann ein Adaptieren v der Konfiguration der zumindest einen Arbeitsfunktion der Hebevorrichtung 1 über eine zweite Benutzerschnittstelle 22 auf einem zweiten Endgerät 12 erfolgen kann. Weiter kann ein Versenden vi der adaptierten Konfiguration der zumindest einen Arbeitsfunktion der Hebevorrichtung 1 von dem zweiten Endgerät 12 an eine Konfigurationsschnittstelle 3 der Steuerung 2 der Hebevorrichtung 1 erfolgen, worauf ein Empfangen vii der adaptierten Konfiguration der zumindest einen Arbeitsfunktion der Hebevorrichtung 1 durch eine Konfigurationsschnittstelle 3 der Steuerung 2 der Hebevorrichtung 1 erfolgen kann. Ein Konfigurieren viii der zumindest einen Arbeitsfunktion der Hebevorrichtung 1 durch die Steuerung 2 der Hebevorrichtung 1 kann gemäß der empfangenen adaptierten Konfiguration erfolgen. Die Durchführung eines solchen Verfahrens zum Adaptieren v der Konfiguration der zumindest einen Arbeitsfunktion der Hebevorrichtung 1 kann im Wesentlichen beliebig oft wiederholt werden.

Figur 3 zeigt eine Ausführung des Verfahrens der Figur 2, in welchem ein Konfigurieren der zumindest einen Arbeitsfunktion der Hebevorrichtung 1 durch die Steuerung 2 der Hebevorrichtung 1 gemäß der empfangenen Vorkonfiguration und/oder der empfangenen adaptierten Konfiguration in Abhängigkeit einer Berechtigung zum Konfigurieren der zumindest einen Arbeitsfunktion erfolgen kann. Dabei kann eine Berechtigungsabfrage q erfolgen.

Figur 4 zeigt eine Ausführung eines ersten Endgeräts 11 mit einer ersten Benutzerschnittstelle 21. Das erste Endgerät 11 kann als ein durch einen Benutzer über eine erste Benutzerschnittstelle 21 bedienbarer Personal Computer, ein Tablet oder ein Smartphone ausgebildet sein.

Eine erste Benutzerschnittstelle 21 eines ersten Endgeräts 11 kann menügeführt und/oder mit einer Eingabemaske in Form einer Benutzerführung mit grafischer, zeichenorientierter oder sprachorientierter Benutzeroberfläche ausgeführt sein. Über eine erste Benutzerschnittstelle 21 kann eine Auswahl aus einem Umfang von für eine Ausführung der Hebevorrichtung 1 grundsätzlich vorhandenen Arbeitsfunktionen getroffen werden, und/oder ein Ausmaß der Nutzbarkeit mit der Hebevorrichtung 1 durchführbaren Arbeitsfunktion oder Arbeitsfunktionen konfiguriert werden.

Bei dem Vorkonfigurieren i der zumindest einen Arbeitsfunktion über die erste Benutzerschnittstelle 21 auf dem ersten Endgerät 11 kann zumindest ein erster digitaler Konfigurationsbefehl 31 erstellt werden. Ein Versenden ii des zumindest einen ersten digitalen Konfigurationsbefehls 31 der Vorkonfiguration kann gemäß einem erstem Datenübertagungsprotokoll erfolgen.

Das erste Endgerät 11 kann zum Senden und Empfangen von Konfigurationsbefehlen 31, 32, 33 eine Sendeeinrichtung 8 und eine Empfangseinrichtung 9 aufweisen. Zur Interaktion mit der ersten Benutzerschnittstelle 21 kann das erste Endgerät 11 Eingabemittel 10 aufweisen.

Das erste Endgerät 11 kann wenigstens eine Recheneinheit 6 und wenigstens eine Speichereinheit 7 aufweisen. Die Recheneinheit 6 kann mit der Speichereinheit 7 in einer Datenverbindung stehen oder in eine solche bringbar sein.

Figur 5 zeigt eine Ausführung eines zweiten Endgeräts 12 mit einer zweiten Benutzerschnittstelle 22. Das zweite Endgerät 12 kann als ein durch einen Benutzer über eine zweite Benutzerschnittstelle 22 bedienbarer Personal Computer, ein Tablet oder ein Smartphone ausgebildet sein. Eine zweite Benutzerschnittstelle 22 eines zweiten Endgeräts 12 kann menügeführt und/oder mit einer Eingabemaske in Form einer Benutzerführung mit grafischer, zeichenorientierter oder sprachorientierter Benutzeroberfläche ausgeführt sein.

Eine zweite Benutzerschnittstelle 22 eines zweiten Endgeräts 12 kann menügeführt und/oder mit einer Eingabemaske in Form einer Benutzerführung mit grafischer, zeichenorientierter oder sprachorientierter Benutzeroberfläche ausgeführt sein. Über eine zweite Benutzerschnittstelle 22 kann eine Auswahl zumindest einer Arbeitsfunktion getroffen werden, und/oder ein Ausmaß der Nutzbarkeit zumindest einer Arbeitsfunktion konfiguriert werden.

Eine Darstellung der zweiten Benutzerschnittstelle 22 kann in Abhängigkeit einer Berechtigung zum Konfigurieren der zumindest einen Arbeitsfunktion erfolgen. So kann beispielsweise eine beim Vorkonfigurieren i abgewählte oder nicht ausgewählte Arbeitsfunktion auf der zweiten Benutzerschnittstelle 22 nicht dargestellt werden.

Bei dem Adaptieren v der Konfiguration der zumindest einen Arbeitsfunktion der Hebevorrichtung 1 über die zweite Benutzerschnittstelle 22 auf dem zweiten Endgerät 12 kann zumindest ein zweiter digitaler Konfigurationsbefehl 32 erstellt werden. Ein Versenden vi des zumindest einen zweiten digitalen Konfigurationsbefehls 32 der adaptierten Konfiguration kann gemäß einem zweiten Datenübertagungsprotokoll erfolgen.

Das zweite Endgerät 12 kann zum Senden und Empfangen von Konfigurationsbefehlen 31, 32, 33 zumindest eine Sendeeinrichtung 15 und zumindest eine Empfangseinrichtung 16 aufweisen. Zur Interaktion mit der ersten Benutzerschnittstelle 21 kann das erste Endgerät 11 Eingabemittel aufweisen, die durch einen berührempfindlichen Bildschirm 17, und/oder eine manuell bedienbare Eingabevorrichtung 18 wie eine Tastatur und/oder Computermaus, und/oder eine Spracheingabe in eine Spracherkennungsvorrichtung 19, und/oder eine durch einen Benutzer ausführbare Gestensteuerung, beispielsweise realisiert mit Sensoren wie Infrarot- oder Ultraschallsensoren oder einer Kamera 20 ausbildbar sind.

Das zweite Endgerät 12 kann wenigstens eine Recheneinheit 13 und wenigstens eine Speichereinheit 14 aufweisen. Die Recheneinheit 6 kann mit der Speichereinheit 7 in einer Datenverbindung stehen oder in eine solche bringbar sein.

Vorteilhaft kann ein Versenden der Vorkonfiguration der zumindest einen Arbeitsfunktion der Hebevorrichtung 1 von dem ersten Endgerät 11 und/oder der Konfigurationsschnittstelle 3 der Steuerung 2 der Hebevorrichtung 1 an das zweite Endgerät 12 erfolgen. Ein Versenden der Vorkonfiguration an ein zweites Endgerät 12 kann in Form eines dritten digitalen Konfigurationsbefehls 33 erfolgen.

Figur 6 zeigt eine Anordnung aus einer Steuerung 2 einer Hebevorrichtung 1 einem ersten Endgerät 11 und einem zweiten Endgerät 12.

Die Steuerung 2, insbesondere eine Konfigurationsschnittstelle 3 der Steuerung 1, kann zum Senden und Empfangen von Konfigurationsbefehlen 31, 32, 33 zumindest eine Sendeeinrichtung 23 und zumindest eine Empfangseinrichtung 24 aufweisen.

Die Steuerung 2 kann eine Umformeinrichtung 27 aufweisen, die eine empfangene Vorkonfiguration und/oder eine empfangene adaptierte Konfiguration in ein von einem Bussystem der Steuerung 1 verarbeitbares Datenformat umwandelt. Insbesondere kann eine Umformeinrichtung 27 eine empfangene Vorkonfiguration und/oder eine empfangene adaptierte Konfiguration in von einer Recheneinheit 25 der Steuerung ausführbare Befehle umwandeln.

Die Steuerung 2 kann wenigstens eine Recheneinheit 25 und wenigstens eine Speichereinheit 26 aufweisen. Die Recheneinheit 25 kann mit der Speichereinheit 26 in einer Datenverbindung stehen oder in eine solche bringbar sein.

Die Übertragungen der Konfigurationsbefehle 31, 32, 33 können gemäß einem oder mehrerer Übertragungsprotokolle erfolgen, wobei nicht ausgeschlossen ist, dass die Übertragungsprotokolle bekannten Standards entsprechen können.

Die Anordnung kann dazu konfiguriert sein, mit entsprechenden Befehlen eines Computerprogramms ein
- Vorkonfigurieren i zumindest einer Arbeitsfunktion der Hebevorrichtung 1 über eine erste Benutzerschnittstelle 21 auf einem ersten Endgerät 11
- Versenden ii der Vorkonfiguration der zumindest einen Arbeitsfunktion der Hebevorrichtung 1, vorzugsweise mit einem beim Vorkonfigurieren i erstellten ersten digitalen Konfigurationsbefehl 31, von dem ersten Endgerät 11 an eine Konfigurationsschnittstelle 3 der Steuerung 2 der Hebevorrichtung 1
- Empfangen iii der Vorkonfiguration der zumindest einen Arbeitsfunktion der Hebevorrichtung 1, vorzugsweise mit dem ersten digitalen Konfigurationsbefehl 31, durch eine Konfigurationsschnittstelle 3 der Steuerung 2 der Hebevorrichtung 1

- Konfigurieren iv der zumindest einen Arbeitsfunktion der Hebevorrichtung 1 durch die Steuerung 2 der Hebevorrichtung 1 gemäß der empfangenen Vorkonfiguration, vorzugsweise gemäß dem ersten digitalen Konfigurationsbefehl 31,
- Adaptieren v der Konfiguration der zumindest einen Arbeitsfunktion der Hebevorrichtung 1 über eine zweite Benutzerschnittstelle 22 auf dem zweiten Endgerät 12
- Versenden vi der adaptierten Konfiguration der zumindest einen Arbeitsfunktion der Hebevorrichtung 1, vorzugsweise mit einem beim Adaptieren v erstellten zweiten digitalen Konfigurationsbefehl 32, von dem zweiten Endgerät 12 an eine Konfigurationsschnittstelle 3 der Steuerung 2 der Hebevorrichtung 1
- Empfangen vii der adaptierten Konfiguration der zumindest einen Arbeitsfunktion der Hebevorrichtung 1, vorzugsweise mit dem zweiten digitalen Konfigurationsbefehl 32, durch die Konfigurationsschnittstelle der Steuerung 2 der Hebevorrichtung 1
- Konfigurieren viii der zumindest einen Arbeitsfunktion der Hebevorrichtung 1 durch die Steuerung 2 der Hebevorrichtung 1 gemäß der empfangenen adaptierten Konfiguration, vorzugsweise gemäß dem zweiten digitalen Konfigurationsbefehl 32
auszuführen.

Für eine Übertragung der Konfigurationsbefehle 31, 32, 33 können unter Ausnutzung von drahtgebundenen und/oder drahtlosen Übertragungsprotokollen zumindest folgende Szenarien bestehen:
Eine Vorkonfiguration in Form eines ersten digitalen Konfigurationsbefehls 31 kann von einem ersten Endgerät 11 an eine Konfigurationsschnittstelle 3 der Steuerung 2 der Hebevorrichtung 1 versendet werden. Der Versand kann dabei direkt an die Konfigurationsschnittstelle 3 erfolgen und/oder über das zweite Endgerät 12 verlaufen.

Eine adaptierten Konfiguration in Form eines zweiten digitalen Konfigurationsbefehls 31 kann von einem ersten Endgerät 11 an eine Konfigurationsschnittstelle 3 der Steuerung 2 der Hebevorrichtung 1 versendet werden. Der Versand kann dabei direkt an die Konfigurationsschnittstelle 3 erfolgen und/oder über das erste Endgerät 11 verlaufen.

Eine Vorkonfiguration der zumindest einen Arbeitsfunktion der Hebevorrichtung 1 in Form eines dritten digitalen Konfigurationsbefehls 33 kann von dem ersten Endgerät 11 und/oder einer Konfigurationsschnittstelle 3 der Steuerung 2 der Hebevorrichtung 1 an das zweite Endgerät 12 versendet werden. Der Versand kann dabei direkt an das zweite Endgerät 12 und/oder über das erste Endgerät 11 verlaufen.

In Figur 7 ist eine Ausführung einer Hebevorrichtung 1 mit einer schematischen Darstellung einer Steuerung 2 gezeigt.

Die Steuerung 2 selbst kann an der Hebevorrichtung 1 angeordnet sein.

Die Hebevorrichtung 1 weist ein Armsystem 4 mit einem daran angeordneten Arbeitsgerät 5 in Form eines Arbeitskorbs auf. Eine solche Ausführung der Hebevorrichtung 1 kann einer Hubarbeitsbühne entsprechen.

Das Armsystem weist einen Kransockel 34, eine Kransäule 35, einen Hubarm 36 und einen Knickarm 37 auf, wobei der Knickarm 37 zur Längenänderung einen teleskopierbaren ersten Kranschubarm 39 und einen teleskopierbaren zweiten Kranschubarm 39 aufweist.

Die Stellung des Arbeitsgeräts 5 kann durch eine Geometrieänderung des Armsystem 4 und durch einen zwischen dem Armsystem 4 und dem Arbeitsgerät 5 angeordneten Aktuator 30 geändert werden.

Freiheitsgrade der Bewegung des Armsystems 4 der Hebevorrichtung 1 können grundsätzlich Winkel von Armen 35, 36, 37 des Armsystems 4 zueinander und Längen von längenveränderbaren Armen 38, 39 umfassen. Ein Armsystem 4 kann durch eine drehbare Lagerung im Kransockel 34 einen Freiheitsgrad der Rotation ausweisen. Durch eine bewegbare Lagerung des Arbeitsgeräts 5 kann zumindest ein weiterer Freiheitsgrad der Bewegung vorliegen.

In der gezeigten Ausführung umfasst die Sensorik der Hebevorrichtung 1 zur Erfassung von Werten der Freiheitsgrade der Bewegung der Hebevorrichtung 1 einen Schubstellungssensor s1 zur Erfassung der Schubstellung des ersten Kranschubarms 38, einen Schubstellungssensor s1 zur Erfassung der Schubstellung des zweiten Kranschubarms 39, einen Drehwinkelsensor d1 zur Erfassung der Drehstellung um eine vertikale Achse der Kransäule 35 zum Kransockel 34, einen Knickwinkelsensor k1 zur Erfassung der Knickwinkelstellung des Hubarms 36 relativ zur Kransäule 35, einen Knickwinkelsensor k2 zur Erfassung der Knickwinkelstellung des Knickarms 37 relativ zum Hubarm 36 und einen Sensor p zur Erfassung zumindest eines Betriebsparameters des Aktuators 28. Eine Erfassung zumindest eines Betriebsparameters kann ebenso für den Aktuator 29 erfolgen. Die Aktuatoren 28, 29 können elektrisch oder hydraulisch ausgebildet sein.

Weiter umfasst die Sensorik in der gezeigten Ausführung einen Sensor 40, mittels welchem die Stellung des Arbeitsgeräts 5 erfasst werden kann. Die durch den in dieser Ausführung als Winkelsensor w1 ausgebildeten Sensor 40 erfasste Stellung des Arbeitsgeräts 5 kann einer Stellung relativ zum Armsystem 4 oder zu einer Richtung im Raum entsprechen. So kann beispielsweise durch den Winkelsensor w1 jeweils eine Drehwinkelstellung des Arbeitsgeräts 5 um eine der drei Raumachsen erfasst werden. Es ist auch möglich, dass ein Sensor 40 zur Erfassung der Stellung des Arbeitsgeräts 5 am Arbeitsgerät 5 oder am Armsystem 4 selbst angeordnet ist.

Die von der Sensorik erfassten Werte der Freiheitsgrade der Bewegung der Hebevorrichtung 1 können der Steuerung 2 über entsprechende Verbindungen, sei es eine kabelgebundene Messleitung oder eine drahtlose Verbindung, zugeführt werden.

Ein wie zuvor beschriebenes Konfigurieren iv, viii der zumindest einen Arbeitsfunktion kann ein zumindest teilweises Freischalten und/oder zumindest teilweises Beschränken
- zumindest einer Assistenzfunktion zum zumindest teilautomatisierten Betrieb der Hebevorrichtung 1, und/oder
- zumindest einer Arbeitsfunktion zum Manipulieren eines Arbeitsgeräts 5 der Hebevorrichtung 1, und/oder
- zumindest einer Arbeitsfunktion zum Manipulieren einer von der Hebevorrichtung 1 angehobenen oder anzuhebenden Last, und/oder
- zumindest einer verfügbaren Leistungen eines Arbeitsgeräts 5 und/oder eines Antriebs der Hebevorrichtung 1, und/oder
- zumindest eines Freiheitsgrads der Bewegung eines Armsystems 4 der Hebevorrichtung 1
umfassen.

### Bezugszeichenliste

- 1: Hebevorrichtung
- 2: Steuerung
- 3: Konfigurationsschnittstelle
- 4: Armsystem
- 5: Arbeitsgerät
- 6: Recheneinheit
- 7: Speichereinheit
- 8: Sendeeinrichtung
- 9: Empfangseinrichtung
- 10: Eingabemittel
- 11: erstes Endgerät
- 12: zweites Endgerät
- 13: Recheneinheit
- 14: Speichereinheit
- 15: Sendeeinrichtung
- 16: Empfangseinrichtung
- 17: berührempfindlicher Bildschirm
- 18: Eingabevorrichtung
- 19: Spracherkennungsvorrichtung
- 20: Kamera
- 21: erste Benutzerschnittstelle
- 22: zweite Benutzerschnittstelle
- 23: Sendeeinrichtung
- 24: Empfangseinrichtung
- 25: Recheneinheit
- 26: Speichereinheit
- 27: Umformeinrichtung
- 28: Aktuator
- 29: Aktuator
- 30: Aktuator
- 31: erster Konfigurationsbefehl
- 32: zweiter Konfigurationsbefehl
- 33: dritter Konfigurationsbefehl
- 34: Kransockel
- 35: Kransäule
- 36: Hubarm
- 37: Knickarm
- 38: Kranschubarm
- 39: Kranschubarm
- 40: Sensor
- i, ii, iii, iv: Teile des Verfahrens zur Konfiguration zumindest einer Arbeitsfunktion
- v, vi, vii, viii: Teile des Verfahrens zum Adaptieren einer Konfiguration
- q: Berechtigungsabfrage

- p: Sensor
- s1, s2: Schubstellungssensor
- d1: Drehwinkelsensor
- k1, k2, k3: Knickwinkelsensor

## Patentansprüche

1. Verfahren zur Konfiguration zumindest einer Arbeitsfunktion einer Hebevorrichtung (1), wobei
- ein Vorkonfigurieren (i) zumindest einer Arbeitsfunktion der Hebevorrichtung (1) über eine erste Benutzerschnittstelle (21) auf einem ersten Endgerät (11) erfolgt
- ein Versenden (ii) der Vorkonfiguration der zumindest einen Arbeitsfunktion der Hebevorrichtung (1) von dem ersten Endgerät (11) an eine Konfigurationsschnittstelle (3) einer Steuerung (2) der Hebevorrichtung (1) erfolgt
- ein Empfangen (iii) der Vorkonfiguration der zumindest einen Arbeitsfunktion der Hebevorrichtung (1) durch die Konfigurationsschnittstelle (3) der Steuerung (2) der Hebevorrichtung (1) erfolgt
- ein Konfigurieren (iv) der zumindest einen Arbeitsfunktion der Hebevorrichtung (1) durch die Steuerung (2) der Hebevorrichtung (1) gemäß der empfangenen Vorkonfiguration erfolgt

2. Verfahren nach dem vorangehenden Anspruch, wobei
- ein Adaptieren (v) der Konfiguration der zumindest einen Arbeitsfunktion der Hebevorrichtung (1) über eine zweite Benutzerschnittstelle (22) auf einem zweiten Endgerät (12) erfolgt
- ein Versenden (vi) der adaptierten Konfiguration der zumindest einen Arbeitsfunktion der Hebevorrichtung (1) von dem zweiten Endgerät (12) an eine Konfigurationsschnittstelle (3) der Steuerung (2) der Hebevorrichtung (1) erfolgt
- ein Empfangen (vii) der adaptierten Konfiguration der zumindest einen Arbeitsfunktion der Hebevorrichtung (1) durch die Konfigurationsschnittstelle (3) der Steuerung (2) der Hebevorrichtung (1) erfolgt
- ein Konfigurieren (viii) der zumindest einen Arbeitsfunktion der Hebevorrichtung (1) durch die Steuerung (2) der Hebevorrichtung (1) gemäß der empfangenen adaptierten Konfiguration erfolgt

3. Verfahren nach dem vorangehenden Anspruch, wobei ein Konfigurieren (iv, viii) der zumindest einen Arbeitsfunktion der Hebevorrichtung (1) durch die Steuerung (2) der Hebevorrichtung (1) gemäß der empfangenen Vorkonfiguration und/oder der empfangenen adaptierten Konfiguration in Abhängigkeit einer Berechtigung zum Konfigurieren der zumindest einen Arbeitsfunktion erfolgt.

4. Verfahren nach einem der Ansprüche 2 oder 3, wobei eine Darstellung der zweiten Benutzerschnittstelle (22) in Abhängigkeit einer Berechtigung zum Konfigurieren der zumindest einen Arbeitsfunktion erfolgt.

5. Verfahren nach einem der Ansprüche 2 bis 4, wobei bei dem Adaptieren der Konfiguration der zumindest einen Arbeitsfunktion über die zweite Benutzerschnittstelle (22) auf dem zweiten Endgerät (12) zumindest ein zweiter digitaler Konfigurationsbefehl (32) erstellt wird, wobei ein Versenden des zumindest einen zweiten digitalen Konfigurationsbefehls (32) der adaptierten Konfiguration gemäß einem zweiten Datenübertagungsprotokoll erfolgt.

6. Verfahren nach einem der Ansprüche 2 bis 5, wobei bei dem Adaptieren der Konfiguration der zumindest einer Arbeitsfunktion über die zweite Benutzerschnittstelle (22) auf dem zweiten Endgerät (12) durch eine Interaktion mit der zweiten Benutzerschnittstelle (22) durch den Benutzer über
- einen berührempfindlichen Bildschirm des zweiten Endgeräts (12), und/oder
- eine manuell bedienbare Eingabevorrichtung, und/oder
- eine Spracheingabe in eine Spracherkennungsvorrichtung des zweiten Endgeräts (12), und/oder
- eine durch einen Benutzer ausführbare Gestenteuerung des zweiten Endgeräts (12)
zumindest ein zweiter digitaler Konfigurationsbefehl (32) erstellt wird.

7. Verfahren nach einem der Ansprüche 2 bis 6, wobei ein Versenden der Vorkonfiguration der zumindest einen Arbeitsfunktion der Hebevorrichtung (1) von dem ersten Endgerät (11) und/oder der Konfigurationsschnittstelle (3) der Steuerung (2) der Hebevorrichtung (1) an das zweite Endgerät (12) erfolgt.

8. Verfahren nach einem der vorangehenden Ansprüche, wobei ein Konfigurieren (iv, viii) der zumindest einen Arbeitsfunktion ein zumindest teilweises Freischalten und/oder zumindest teilweises Beschränken
- zumindest einer Assistenzfunktion zum zumindest teilautomatisierten Betrieb der Hebevorrichtung (1), und/oder
- zumindest einer Arbeitsfunktion zum Manipulieren eines Arbeitsgeräts (5) der Hebevorrichtung (1), und/oder
- zumindest einer Arbeitsfunktion zum Manipulieren einer von der Hebevorrichtung (1) angehobenen oder anzuhebenden Last, und/oder
- zumindest einer verfügbaren Leistung eines Arbeitsgeräts (5) und/oder eines Antriebs der Hebevorrichtung (1), und/oder
- zumindest eines Freiheitsgrads der Bewegung eines Armsystems (4) der Hebevorrichtung (1)
umfasst.

9. Verfahren nach einem der vorangehenden Ansprüche, wobei bei dem Vorkonfigurieren (i) der zumindest einen Arbeitsfunktion über die erste Benutzerschnittstelle (21) auf dem ersten Endgerät (11) zumindest ein erster digitaler Konfigurationsbefehl (31) erstellt wird, wobei ein Versenden des zumindest einen ersten digitalen Konfigurationsbefehls (31) der Vorkonfiguration gemäß einem ersten Datenübertagungsprotokoll erfolgt.

10. Verfahren nach einem der vorangehenden Ansprüche, wobei bei dem Vorkonfigurieren (i) zumindest einer Arbeitsfunktion der Hebevorrichtung (1) über die erste Benutzerschnittstelle (21) auf dem ersten Endgerät (11) durch eine Interaktion mit der ersten Benutzerschnittstelle (21) menügeführt und/oder mit einer Eingabemaske durch den Benutzer zumindest ein erster digitaler Konfigurationsbefehl (31) erstellt wird.

11. Anordnung aus einer Steuerung (2) einer Hebevorrichtung (1) und einem ersten Endgerät (11), die zumindest zum
- Vorkonfigurieren (i) zumindest einer Arbeitsfunktion der Hebevorrichtung (1) über eine erste Benutzerschnittstelle (21) auf einem ersten Endgerät (11)
- Versenden (ii) der Vorkonfiguration der zumindest einen Arbeitsfunktion der Hebevorrichtung (1) von dem ersten Endgerät (11) an eine Konfigurationsschnittstelle der Steuerung (2) der Hebevorrichtung (1)
- Empfangen (iii) der Vorkonfiguration der zumindest einen Arbeitsfunktion der Hebevorrichtung (1) durch die Konfigurationsschnittstelle (3) der Steuerung (2) der Hebevorrichtung (1)
- Konfigurieren (iv) der zumindest einen Arbeitsfunktion der Hebevorrichtung (1) durch die Steuerung (2) der Hebevorrichtung (1) gemäß der empfangenen Vorkonfiguration
gemäß einem Verfahren nach einem der vorangehenden Ansprüche konfiguriert ist.

12. Anordnung nach dem vorangehenden Anspruch und einem zweiten Endgerät (12), die zumindest zum
- Adaptieren (v) der Konfiguration der zumindest einen Arbeitsfunktion der Hebevorrichtung (1) über eine zweite Benutzerschnittstelle (22) auf dem zweiten Endgerät (12)
- Versenden (vi) der adaptierten Konfiguration der zumindest einen Arbeitsfunktion der Hebevorrichtung (1) von dem zweiten Endgerät (12) an eine Konfigurationsschnittstelle (3) der Steuerung (2) der Hebevorrichtung (1)
- Empfangen (vii) der adaptierten Konfiguration der zumindest einen Arbeitsfunktion der Hebevorrichtung (1) durch die Konfigurationsschnittstelle (3) der Steuerung (2) der Hebevorrichtung (1)
- Konfigurieren (viii) der zumindest einen Arbeitsfunktion der Hebevorrichtung (1) durch die Steuerung (2) der Hebevorrichtung (1) gemäß der empfangenen adaptierten Konfiguration
gemäß einem Verfahren nach einem der Ansprüche 2 bis 10 konfiguriert ist.

13. Computerprogrammprodukt, umfassend Befehle, die bewirken, dass die Anordnung nach Anspruch 11 oder 12 zumindest
- ein Vorkonfigurieren (i) zumindest einer Arbeitsfunktion der Hebevorrichtung (1) über die erste Benutzerschnittstelle (21) auf dem ersten Endgerät (11)
- ein Versenden (ii) der Vorkonfiguration der zumindest einen Arbeitsfunktion der Hebevorrichtung (1) von dem ersten Endgerät (11) an die Konfigurationsschnittstelle (3) der Steuerung (2) der Hebevorrichtung (1)
- ein Empfangen (iii) der Vorkonfiguration der zumindest einen Arbeitsfunktion der Hebevorrichtung (1) durch die Konfigurationsschnittstelle (3) der Steuerung (2) der Hebevorrichtung (1)
- Konfigurieren (iv) der zumindest einen Arbeitsfunktion der Hebevorrichtung (1) durch die Steuerung (2) der Hebevorrichtung (1) gemäß der empfangenen Vorkonfiguration
gemäß einem Verfahren nach einem der Ansprüche 1 bis 10 ausführt.

14. Computerprogrammprodukt, umfassend Befehle, die bewirken, dass die Anordnung nach Anspruch 12 zumindest
- ein Adaptieren (v) der Konfiguration der zumindest einen Arbeitsfunktion der Hebevorrichtung (1) über die zweite Benutzerschnittstelle (22) auf dem zweiten Endgerät (12)
- ein Versenden (vi) der adaptierten Konfiguration der zumindest einen Arbeitsfunktion der Hebevorrichtung (1) von dem zweiten Endgerät (12) an eine Konfigurationsschnittstelle (3) der Steuerung (2) der Hebevorrichtung (1)
- ein Empfangen (vii) der adaptierten Konfiguration der zumindest einen Arbeitsfunktion der Hebevorrichtung (1) durch die Konfigurationsschnittstelle (3) der Steuerung (2) der Hebevorrichtung (1)
- ein Konfigurieren (viii) der zumindest einen Arbeitsfunktion der Hebevorrichtung (1) durch die Steuerung (2) der Hebevorrichtung (1) gemäß der empfangenen adaptierten Konfiguration
gemäß einem Verfahren nach einem der Ansprüche 2 bis 10 ausführt.

15. Hebevorrichtung (1) mit einer Anordnung nach einem der Ansprüche 11 oder 12, vorzugweise wobei die Hebevorrichtung (1) als Knickarmkran, als Ladekran, als Gabelstapler oder Mitnahmestapler, oder als Hubarbeitsbühne ausgebildet ist.
